# EUROPEAN PATENT APPLICATION

(11) **EP 4 675 942 A1**
(43) Date of publication of application: **07.01.2026**
(21) Application number: 24204309.9
(22) Date of filing: 02.10.2024
(51) Int. Cl.: H04B 10/40, H04B 10/61

(54) **DUAL LASER COHERENT TRANSCEIVER**

(30) Priority: 03.07.2024 US 202418763224
(71) Applicant: II-VI Delaware, Inc., Wilmington, DE 19890 (US)
(72) Inventor: SMOLORZ, Sylvia, Wilmington, 19890 (US); TOMES, Matthew, Wilmington, 19890 (US)
(74) Representative: Schmidt, Christian

(57) **Abstract**

The present disclosure is directed to a dual laser transceiver system. The dual laser transceiver system may comprise a dual laser, with the dual laser further comprising a first laser chip and a second laser chip, a polarization rotator and a polarization combining beam splitter. The dual laser may be coupled to a photonic integrated circuit that may comprise a polarization rotator and splitter operable to general a local oscillator and a modulator signal.

## Description

### TECHNICAL FIELD

The present disclosure generally relates to a dual laser coherent transceiver.

### BACKGROUND

Aspects of the present disclosure relate to a dual laser coherent transceiver. Various issues may exist with conventional solutions for classification. In this regard, conventional coherent transceivers may be costly, cumbersome, and/or inefficient.

Limitations and disadvantages of conventional systems and methods will become apparent to one of skill in the art, through comparison of such approaches with some aspects of the present methods and systems set forth in the remainder of this disclosure with reference to the drawings.

### BRIEF SUMMARY OF THE DISCLOSURE

Shown in and/or described in connection with at least one of the figures, and set forth more completely in the claims is a dual laser coherent transceiver.

These and other advantages, aspects and novel features of the present disclosure, as well as details of illustrated embodiments thereof, will be more fully understood from the following description and drawings.

### BRIEF DESCRIPTION OF THE DRAWINGS

The various features and advantages of the present disclosure may be more readily understood with reference to the following detailed description taken in conjunction with the accompanying drawings, wherein like reference numerals designate like structural elements.
FIG. 1 is a block diagram illustrating a dual laser transceiver system, according to some embodiments of the present disclosure.
FIG. 2 is a block diagram further illustrating the dual laser transceiver system from FIG. 1, according to some embodiments of the present disclosure.
FIG. 3 is a diagram that describes a dual laser transceiver system 100, according to some embodiments of the present disclosure.
FIG. 4 is a block diagram that describes a dual laser transceiver system 100, according to some embodiments of the present disclosure.

### DESCRIPTION

The following discussion provides various examples of a method and system for a dual laser transceiver. Such examples are non-limiting, and the scope of the appended claims should not be limited to the particular examples disclosed. In the following discussion, the terms "example" and "e.g." are non-limiting.

The figures illustrate the general manner of construction, and descriptions and details of well-known features and techniques may be omitted to avoid unnecessarily obscuring the present disclosure. In addition, elements in the drawing figures are not necessarily drawn to scale. For example, the dimensions of some of the elements in the figures may be exaggerated relative to other elements to help improve understanding of the examples discussed in the present disclosure. The same reference numerals in different figures denote the same elements.

The term "or" means any one or more of the items in the list joined by "or". As an example, "x or y" means any element of the three-element set {(x), (y), (x, y)}. As another example, "x, y, or z" means any element of the seven-element set {(x), (y), (z), (x, y), (x, z), (y, z), (x, y, z)}.

The terms "comprises," "comprising," "includes," and/or "including," are "open ended" terms and specify the presence of stated features, but do not preclude the presence or addition of one or more other features.

The terms "first," "second," etc. may be used herein to describe various elements, and these elements should not be limited by these terms. These terms are only used to distinguish one element from another. Thus, for example, a first element discussed in this disclosure could be termed a second element without departing from the teachings of the present disclosure.

Unless specified otherwise, the term "coupled" may be used to describe two elements directly contacting each other or describe two elements indirectly connected by one or more other elements. For example, if element A is coupled to element B, then element A can be directly contacting element B or indirectly connected to element B by an intervening element C. Similarly, the terms "over" or "on" may be used to describe two elements directly contacting each other or describe two elements indirectly connected by one or more other elements.

Embodiments of the present disclosure may comprise a dual laser transceiver system, the dual laser transceiver system comprising a dual laser, the dual laser further comprising a first laser chip. Embodiments may also comprise a second laser chip. Embodiments may also comprise a polarization rotator. Embodiments may also comprise a Polarization Combining Beam Splitter (PCBS). In accordance with various embodiments, the first laser chip may be operable to generate a first light beam, and the first light beam may be coupled to the PCBS. In accordance with various embodiments, the second laser chip may be operable to generate a second light beam, and the second light beam may be coupled to the polarization rotator.

In accordance with various embodiments, the polarization rotator may be operable to generate a rotated polarization light beam, by rotating the polarization of the second light beam. In accordance with various embodiments, the rotated polarization light beam may be coupled to the PCBS. In accordance with various embodiments, the PCBS may be operable to combine the first light beam and the rotated polarization light beam into a first output beam, and the first output beam may be coupled to a fiber.

Embodiments may also comprise a photonic integrated circuit (PIC), comprising a Polarization Rotator and Splitter (PRS). In accordance with various embodiments, the PRS may be coupled to the fiber to receive the first output beam. In accordance with various embodiments, the PRS may be operable to generate a second output beam, by extracting a portion of the first light beam from the received first output beam. In accordance with various embodiments, the PRS may be operable to generate a third output beam, by extracting a portion of the rotated polarization light beam from the received first output beam, and rotating the portion of the rotated polarization light beam further, so that the third output beam may be substantially identical to a portion of the second light beam.

In accordance with various embodiments, the first light beam may be substantially the same as the second light beam. In accordance with various embodiments, the first light beam may be different from the second light beam. Embodiments may also comprise one or both of a wavelength and a linewidth of the first light beam and the second light beam to be different.

In accordance with various embodiments, the first light beam and/or the second light beam may comprise a tunable wavelength. In accordance with various embodiments, the photonic integrated circuit may comprise a low loss switch. In accordance with various embodiments, the low loss switch may comprise an interferometer and may be operable to generate a local oscillator beam and a modulator input beam.

In accordance with various embodiments, the interferometer may be a Mach-Zehnder interferometer. In accordance with various embodiments, the second output beam may be operable as a local oscillator signal. In accordance with various embodiments, the third output beam may be operable as a modulator input signal. In accordance with various embodiments, the third output beam may be operable as a local oscillator signal. In accordance with various embodiments, the second output beam may be operable as a modulator input signal.

In accordance with various embodiments, the polarization rotator may be a micro-optical element. In accordance with various embodiments, the polarization rotator may be operable to rotate an input signal from a transverse electric mode into a transverse magnetic mode, or vice versa. In accordance with various embodiments, the rotated polarization light beam may be orthogonal to the second light beam and the first light beam.

In accordance with various embodiments, the first light beam and the second light beam may be both polarized in a transverse electric mode or a transverse magnetic mode. In accordance with various embodiments, the fiber may be a polarization-maintaining fiber pigtail. In some embodiments, the second output beam and the third output beam may be both polarized in a transverse electric mode or a transverse magnetic mode.

In accordance with various embodiments, the system may comprise one or more of a mirror and a lens. In accordance with various embodiments, the mirror may receive light from the second laser chip and redirect the received light to an input of the polarization rotator. In accordance with various embodiments, the lens may be a collimating lens.

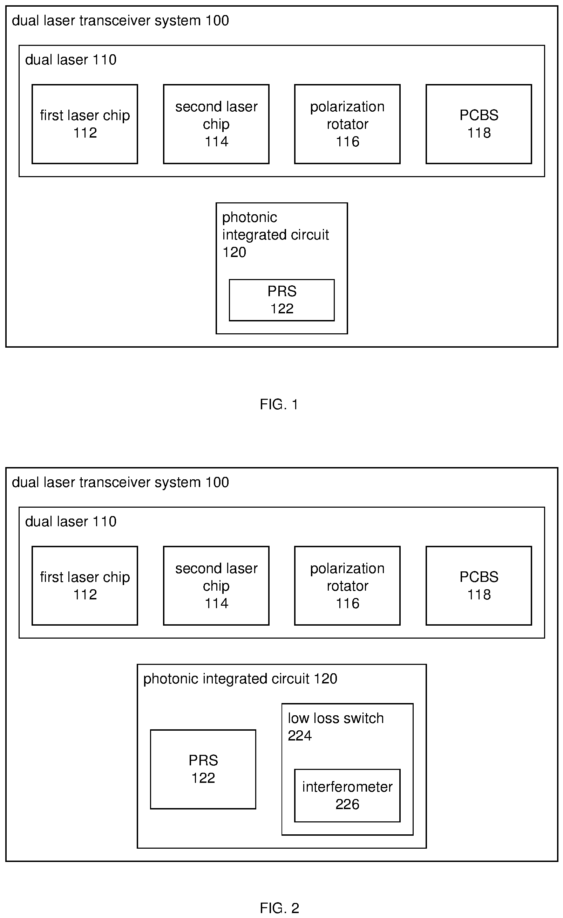

Referring now to FIG. 1, FIG. 1 is a block diagram that describes a dual laser transceiver system 100, according to some embodiments of the present disclosure. In some embodiments, the dual laser transceiver system 100 may comprise a dual laser 110 and a photonic integrated circuit (PIC) 120. The dual laser 110 may include a first laser chip 112, a second laser chip 114, a polarization rotator 116, and a PCBS 118. The first laser chip 112 may be operable to generate a first light beam, and the first light beam may be coupled to the PCBS 118. The second laser chip 114 may be operable to generate a second light beam, and the second light beam may be coupled to the polarization rotator 116.

In some embodiments, the polarization rotator 116 may be operable to generate a rotated polarization light beam, by rotating the polarization of the second light beam. The rotated polarization light beam may be coupled to the PCBS 118. The PCBS 118 may be operable to combine the first light beam and the rotated polarization light beam into a first output beam, and the first output beam may be coupled to a polarization maintaining fiber, where the first polarization of the output beam couples into a first fiber mode and the second polarization of the output beam couples into a second fiber mode. The photonic integrated circuit 120 may include a PRS 122.

In some embodiments, the PRS 122 may be coupled to the fiber to receive the first output beam. The PRS 122 may be operable to generate a second output beam, by extracting a portion of the first light beam from the received first output beam. The PRS 122 may be operable to generate a third output beam, by extracting a portion of the rotated polarization light beam from the received first output beam, and rotating the portion of the rotated polarization light beam further, so that the third output beam may be substantially identical to a portion of the second light beam.

In some embodiments, the first light beam may be substantially the same as the second light beam. In some embodiments, the first light beam may be different from the second light beam. In some embodiments, at least one of a wavelength and a linewidth of the first light beam and the second light beams may be different. In some embodiments, the first light beam and/or the second light beam may comprise a tunable wavelength.

In some embodiments, the second output beam may be operable as a local oscillator signal. The third output beam may be operable as a modulator input signal. In some embodiments, the third output beam may be operable as a local oscillator signal. The second output beam may be operable as a modulator input signal. In some embodiments, the polarization rotator 116 may be a micro-optical element. In some embodiments, the polarization rotator 116 may be operable to rotate an input signal from a transverse electric mode into a transverse magnetic mode, or vice versa.

In some embodiments, the rotated polarization light beam may be orthogonal to the second light beam and the first light beam. In some embodiments, the first light beam and the second light beam may be both polarized in a transverse electric mode or a transverse magnetic mode. In some embodiments, the fiber may be a polarization-maintaining fiber pigtail. In some embodiments, second output beam and the third output beam may be both polarized in a transverse electric mode or a transverse magnetic mode. In some embodiments, the system further comprises one or more of a mirror and a lens. In some embodiments, the mirror may receive light from the second laser chip 114 and redirects the received light to an input of the polarization rotator 116. In some embodiments, the lens may be a collimating lens.

FIG. 2 is a block diagram that further describes the dual laser transceiver system 100 from FIG. 1, according to some embodiments of the present disclosure. In some embodiments, the photonic integrated circuit (PIC) 120 may include a low loss switch 224. In some embodiments, the low loss switch 224 may include an interferometer 226 and may be operable to generate a local oscillator beam and a modulator input beam. In some embodiments, the interferometer 226 may be a Mach-Zehnder interferometer.

In some dual laser transceiver systems, a single laser may be used to generate a light beam for both a modulator input and a local oscillator input of a coherent transceiver. Correspondingly, such an approach may not permit different wavelengths or linewidths, for example, for the modulator input and/or the local oscillator input. Furthermore, the power of a single laser generating a single light beam may be limited.

Two lasers may be used alternatively. One laser may generate the modulator input light beam and the other laser may generate the local oscillator input light beam. The two lasers may be discrete elements, separately packaged, and coupled to two independent ports on a PIC 120. In some such transceivers, the receiver and transmitter may be discretely packaged. Because of space constraints, it may be disadvantageous to fit two separately packaged lasers into most optical pluggable transceivers. Furthermore, providing two independent ports and corresponding fibers may increase size and cost to the coupling with the PIC.

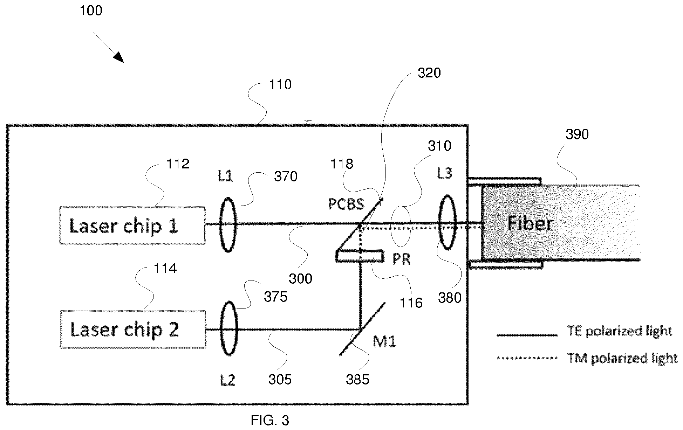

FIG. 3 is a diagram that describes a dual laser transceiver system 100, according to some embodiments of the present disclosure. In some embodiments, the dual laser transceiver system 100 may comprise a dual laser 110. The dual laser 110 may include a first laser chip 112, a second laser chip 114, a polarization rotator 116, and a PCBS 118.

The first laser chip 112 may be operable to generate a first light beam 300, and the first light beam 300 may be coupled to the PCBS 118. The second laser chip 114 may be operable to generate a second light beam 305, and the second light beam 305 may be coupled to the polarization rotator 116.

There are also shown optional lenses 370 (L1), 375 (L2), 380 (L3). There is also shown an optional mirror 385 (M1), and fiber 390.

In some embodiments, the polarization rotator 116 may be operable to generate a rotated polarization light beam 320 (illustrated with the dashed line), by rotating the polarization of the second light beam 305. The rotated polarization light beam 320 may be coupled to the PCBS 118. The PCBS 118 may be operable to combine the first light beam 300 and the rotated polarization light beam 320 into a first output beam 310, and the first output beam 310 may be coupled to a fiber 390. The fiber 390 may be used to communicatively couple the dual laser 110 to a photonic integrated circuit (not shown in FIG. 3).

In some embodiments, the first light beam 300 may be substantially the same as the second light beam 305. In some embodiments, the first light beam 300 may be different from the second light beam 305. In some embodiments, at least one of a wavelength and a linewidth of the first light beam 300 and the second light beam 305 may be different. In some embodiments, the first light beam 300 and/or the second light beam 305 may comprise a tunable wavelength.

In some embodiments, the polarization rotator 116 may be a micro-optical element. In some embodiments, the polarization rotator 116 may be operable to rotate an input signal (e.g., second input beam 305, or the second input beam 305 via mirror 385) from a transverse electric mode into a transverse magnetic mode, or vice versa.

In some embodiments, the rotated polarization light beam 320 may be orthogonal to the second light beam 305 and the first light beam 300. In some embodiments, the first light beam 300 and the second light beam 305 may be both polarized in a transverse electric mode or a transverse magnetic mode, as illustrated in FIG. 3 by the solid and the dashed line. In some embodiments, the fiber 390 may be a polarization-maintaining fiber pigtail. In some embodiments, the system further comprises one or more of a mirror and a lens, for example mirror 385, lenses 370, 375, 380. In some embodiments, the mirror 385 may receive light from the second laser chip 114 and redirect the received light, for example the second input beam 305, to an input of the polarization rotator 116. In some embodiments, the lens, for example 370, 375, and/or 380, may be a collimating lens.

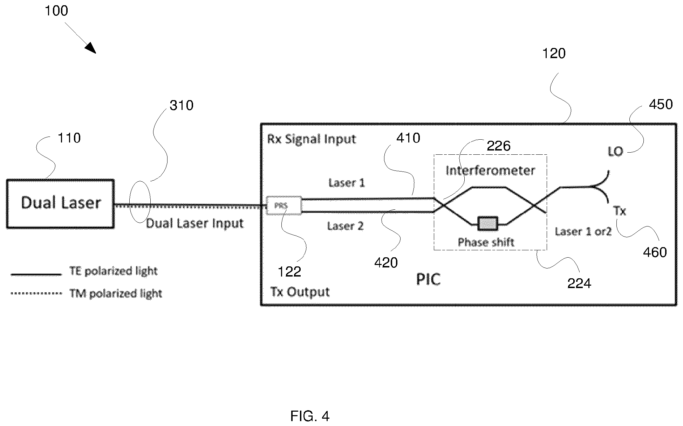

FIG. 4 is a block diagram that describes a dual laser transceiver system 100, according to some embodiments of the present disclosure. In some embodiments, the dual laser transceiver system 100 may comprise a dual laser 110 and a photonic integrated circuit (PIC) 120.

The PCBS 118 within the dual laser 110 may be operable to combine the first light beam 300 and the rotated polarization light beam 320 into a first output beam 310, and the first output beam 310 may be coupled to a fiber 390 (not shown in FIG. 4). Similarly, said coupling may be by free-space transmission. In general, the coupling to the PIC may be by free-space transmission, in accordance with various embodiments of the disclosure. The photonic integrated circuit 120 may include a PRS 122.

In some embodiments, the PRS 122 may be coupled to the fiber 390 to receive the first output beam 310. The PRS 122 may be operable to generate a second output beam 410, by extracting a portion of the first light beam 300 from the received first output beam 310. The PRS 122 may be operable to generate a third output beam 420, by extracting a portion of the rotated polarization light beam 320 from the received first output beam 310, and rotating the portion of the rotated polarization light beam 320 further, so that the third output beam 420 may be substantially identical to a portion of the second light beam 305.

In some embodiments, the second output beam 410 may be operable as a local oscillator signal 450, for example. The third output beam 420 may be operable as a modulator input signal 460, for example. In some embodiments, the third output beam 420 may be operable as a local oscillator signal and the second output beam 410 may be operable as a modulator input signal.

In some embodiments, second output beam 410 and the third output beam 420 may be both polarized in a transverse electric mode or a transverse magnetic mode. In FIG. 4, an exemplary illustration with the second output beam 410 and the third output beam 420 both in transverse electric mode is illustrated.

In some embodiments, the photonic integrated circuit (PIC) 120 may include a low loss switch 224. In some embodiments, the low loss switch 224 may include an interferometer 226 and may be operable to select either the second output beam 410 or the third output beam 420 to generate a local oscillator beam 450 and a modulator input beam 460. In some embodiments, the interferometer 226 may be a Mach-Zehnder interferometer.

The present disclosure claims priority of U.S. Patent Application No. 18/763,224 filed on July 3, 2024. The entire disclosure of this application is hereby explicitly incorporated by reference into the present application.

The present disclosure is directed to a dual laser transceiver system. The dual laser transceiver system may comprise a dual laser, with the dual laser further comprising a first laser chip and a second laser chip, a polarization rotator and a polarization combining beam splitter. The dual laser may be coupled to a photonic integrated circuit that may comprise a polarization rotator and splitter operable to general a local oscillator and a modulator signal.

The present disclosure includes reference to certain examples, however, it will be understood by those skilled in the art that various changes may be made and equivalents may be substituted without departing from the scope of the disclosure. In addition, modifications may be made to the disclosed examples without departing from the scope of the present disclosure. Therefore, it is intended that the present disclosure not be limited to the examples disclosed, but that the disclosure will include all examples falling within the scope of the appended claims.

## Claims

1. A dual laser transceiver system, said dual laser transceiver system comprising:
a dual laser comprising:
a first laser chip, a second laser chip, a polarization rotator, and a polarization combining beam splitter (PCBS);
wherein said first laser chip is operable to generate a first light beam, and said first light beam is coupled to said PCBS;
wherein said second laser chip is operable to generate a second light beam, and said second light beam is coupled to said polarization rotator;
wherein said polarization rotator is operable to generate a rotated polarization light beam, by rotating the polarization of said second light beam;
wherein said rotated polarization light beam is coupled to said PCBS;
wherein said PCBS is operable to combine said first light beam and said rotated polarization light beam into a first output beam, and said first output beam is coupled to a fiber; and
a photonic integrated circuit, comprising:
a polarization rotator and splitter (PRS), said PRS coupled to said fiber to receive said first output beam;
wherein said PRS is operable to generate a second output beam, by extracting a portion of said first light beam from said received first output beam; and
wherein said PRS is operable to generate a third output beam, by extracting a portion of said rotated polarization light beam from said received first output beam, and rotating said portion of said rotated polarization light beam further, so that said third output beam is substantially identical to a portion of said second light beam.

2. The system of claim 1, wherein said first light beam may be substantially the same as said second light beam.

3. The system of claim 1 or 2, wherein said first light beam be different from said second light beam.

4. The system of claim 3, wherein one or both of a wavelength and a linewidth of said first light beam and said second light beams are different.

5. The system of claim 3 or 4, wherein said first light beam and said second light beam comprise a tunable wavelength.

6. The system of any one of claims 1 to 5, wherein said photonic integrated circuit comprises a low loss switch.

7. The system of claim 6, wherein said low loss switch comprises an interferometer and is operable to generate a local oscillator beam and a modulator input beam.

8. The system of any one of claims 1 to 7, wherein said second output beam is operable as a local oscillator signal and wherein said third output beam is operable as a modulator input signal.

9. The system of any one of claims 1 to 8, wherein said third output beam is operable as a local oscillator signal and wherein said second output beam is operable as a modulator input signal.
